# EUROPÄISCHE PATENTSCHRIFT

(11) **EP 1 640 634 B1**
(45) Veröffentlichungstag und Bekanntmachung des Hinweises auf die Patenterteilung: **01.10.2008**
(21) Anmeldenummer: 05010714.3
(22) Anmeldetag: 18.05.2005
(51) Int. Cl.: F16F 9/58, F16F 1/371

(54) **Federelement**
Spring element
Element de ressort

(30) Priorität: 28.09.2004 DE 102004046925
(43) Veröffentlichungstag der Anmeldung: 29.03.2006
(73) Patentinhaber: Carl Freudenberg KG, 69469 Weinheim (DE)
(72) Erfinder: Dehlwes, Stephan, 27432 Bremervörde (DE); Weber, Michael, 21244 Buchholz (DE); Gudat, Eckard, 21218 Seevetal (DE)

(56) Entgegenhaltungen:
- DE-A1- 10 157 325
- DE-U1- 9 217 608
- FR-A- 1 046 185
- US-A- 3 081 993
- US-B1- 6 296 237

## Beschreibung

### Technisches Gebiet

Die Erfindung betrifft ein Federelement nach dem Oberbegriff des Patentanspruchs 1.

### Stand der Technik

Aus der DE 101 57 325 A1 sowie der DE 101 24 924 A1 sind Federelemente der eingangs genannten Art bekannt. Diese Federelemente finden innerhalb des Fahrwerks von Automobilen Verwendung. Sie werden dabei insbesondere als Schwingungsdämpfer eingesetzt. Dabei übernehmen die Federelemente eine Anschlagfunktion und charakterisieren die Fahrzeugfederung. Die bekannten Federelemente weisen Stützelemente auf, welche als Stützringe ausgebildet sind. Diese Stützelemente umfassen einen Stützkörper aus thermoplastischem Kunststoff und eine Armierungseinheit, welche völlig im thermoplastischen Kunststoff eingebettet ist. Diese Federelemente weisen im Hinblick auf ihre Herstellung große Nachteile auf. Dabei ist insbesondere problematisch, dass bei der Herstellung dafür Sorge getragen werden muss, dass zwischen den miteinander wechselwirkenden Bauteilen keine Hohlräume entstehen. Einmal entstandene Hohlräume verhindern, dass das Stützelement seine stabilisierende Wirkung auf den Grundkörper ausüben kann. Insoweit sind die gattungsbildenden Federelemente äußerst störanfällig.

Aus der US 3,081,993 ist ein Federelement mit einem Band zur Einstellung der Federrate bekannt. Aus der FR 1.046.185 ist ein Federelement mit einem massiven Kautschukkörper bekannt. Aus der DE 92 17 608 U1 ist ein Federelement bekannt, welches Produktionsabfälle in Hohlräumen aufnimmt. Aus der US 6,296,237 B1 ist ein Federelement bekannt, welches eine topfförmige Armierungseinheit aufweist, in welcher eine Gummilage durch Vulkanisation angeordnet ist.

### Darstellung der Erfindung

Der Erfindung liegt die Aufgabe zu Grunde, ein Federelement der eingangs genannten Art derart auszugestalten und weiterzubilden, dass nach problemloser Fertigung ein fester Sitz der Armierungseinhat am Stützkörper gewährleistet ist.

Erfindungsgemäß wird die voranstehende Aufgabe mit den Merkmalen des Patentanspruchs 1 gelöst. Danach ist ein Federelement dadurch gekennzeichnet, dass der Stützkörper und die Armierungseinheit dem Grundkörper als separat gefertigte Einzelteile nach separater Montage zugeordnet sind, wobei die Armierungseinheit ringförmig und im Querschnitt S-förmig ausgestaltet ist.

Erfindungsgemäß ist zunächst erkannt worden, dass die Federelemente des Standes der Technik im Hinblick auf deren Betriebstauglichkeit große Nachteile aufweisen. In einem weiteren Schritt ist schließlich erkannt worden, dass dies mit der Ausgestaltung des Stützelements einher geht. Schließlich ist erkannt worden, dass eine separate Fertigung der Einzelteile des Stützelements und eine separate Montage am Grundkörper erlaubt, Anordnungsprobleme einzelner Bauteile eines Stützelements voneinander zu entkoppeln. Insoweit ist die eingangs genannte Aufgabe auf einfache Weise dadurch gelöst, dass jedes Bauteil des Stützelements so am Grundkörper an ein bereits bestehendes System angepasst werden kann, dass die Stabilisierungswirkung des Stützelements nicht in Frage gestellt ist.

Folglich ist mit dem erfindungsgemäßen Federelement ein Federelement angegeben, mit welchem ein optimaler Betrieb bei problemloser Fertigung gewährleistet ist.

Die Armierungseinheit ist S-förmig ausgebildet. Eine S-förmige Ausgestaltung ist von Vorteil, da die Armierungseinheit eine sehr große Oberfläche zur Verfügung stellt, die mit dem Stützkörper kraftschlüssig in Eingriff bringbar ist.

Der Grundkörper ist rotationssymmetrisch mit einem axialen Durchgang als Aufnahme ausgebildet.

Der Stützkörper und die Armierungseinheit sind rotationssymmetrisch ausgebildet und umgeben den Grundkörper umfänglich.

Die Armierungseinheit ist ringförmig ausgebildet. Die ringförmige Ausgestaltung erlaubt einen besonders festen Sitz der Armierungseinheit entweder am Grundkörper oder am Stützkörper. Hierdurch ist eine besonders stabile Verbindung zwischen den Bauteilen realisierbar.

In einer konstruktiv besonders günstigen Ausgestaltung könnte der Stützkörper direkt am Grundkörper anliegen und die Armierungseinheit den Stützkörper umfänglich umgeben. Denkbar ist auch, dass die Armierungseinheit direkt am Grundköper anliegt und der Stützkörper die Armierungseinheit umfänglich umgibt. Ganz in Abhängigkeit von den Materialien, aus denen Armierungseinheit, Stützkörper und Grundkörper gefertigt sind, kann die Reihenfolge der Anordnung gewählt werden, die den Materialien zuträglich ist. Dabei ist insbesondere denkbar, dass solche Materialien direkt aneinander anliegen, die im Betrieb einen geringen Abrieb aneinander bewirken. Denkbar ist auch, solche Materialien aneinander zu legen, die leicht mit einander adhäsive Bindungen eingehen. Schließlich ist realisierbar, die Stabilisierungswirkung des Stützelements im Hinblick auf ihre Härte einzustellen.

Der Grundkörper könnte Ausnehmungen zur definierten Aufnahme des Stützelements aufweisen. Die Vorkehrung von Ausnehmungen ist dahin gehend vorteilhaft, dass das Stützelement gegen ein Verrutschen gesichert ist.

Der Grundkörper ist rotationssymmetrisch mit einem axialen Durchgang als Aufnahme ausgebildet. Dabei ist denkbar, dass der Grundkörper in gewissen Bereichen Verdickungen oder Verdünnungen, Nuten oder Ausnehmungen aufweist. Die Vorkehrung von Nuten oder Ausnehmungen ermöglicht ein sicheres Fixieren des Stützelements gegen axiales Verrutschen oder Verrücken. Hierdurch ist sicher gestellt, dass die Stabilisierung des Federelements stets an der gleichen Stelle erfolgt.

Die Materialien, aus denen der Stützkörper und die Armierungseinheit gefertigt sind, könnten biegesteifer sein, als das Material, aus dem der Grundkörper gefertigt ist. Dabei ist insbesondere denkbar, dass die einzelnen Materialien über unterschiedliche Bereiche der Kraftbeaufschlagung elastisch deformierbar sind. Durch diese konkrete Ausgestaltung ist ein Federelement realisierbar, das im Hinblick auf seine Steifigkeit selektiv einstellbar ist.

Die Armierungseinheit könnte aus Metall gefertigt sein. Vor diesem Hintergrund ist denkbar, dass die Armierungseinheit als Tiefziehteil gefertigt ist. Diese konkrete Ausgestaltung erlaubt eine besonders präzise Fertigung der Armierungseinheit bei maximaler Stabilität. Denkbar ist, dass das Tiefziehteil zumindest auf einer Seite bündig mit dem Stützkörper abschließt. Hierbei ist von Vorteil, dass das Tiefziehteil keine Überstände definiert, die weitere Bauelemente in einer Anordnung stören.

Der Stützkörper könnte aus einem thermoplastischen Material gefertigt sein. Thermoplasten sind im Hinblick auf ihre Materialeigenschaften bekannt und erlauben insoweit eine problemlose Verarbeitung. Des weiteren sind sie korrosionsresistent und kommerziell in einfacher Weise erhältlich. Insoweit ist durch diese Ausgestaltung eine problemlose Fertigung erzielbar.

Der Grundkörper könnte aus Gummi gefertigt sein. Gummi stellt ein hochelastisches Material dar, das sehr leicht deformierbar ist und insoweit eine sehr gute Schwingungsentkopplung sicher stellen kann. Ganz in Abhängigkeit vom Maß der Schwingungsentkopplung kann die Wanddicke des Grundkörpers gewählt werden.

Es gibt nun verschiedene Möglichkeiten, die Lehre der vorliegenden Erfindung vorteilhaft auszugestalten und weiterzubilden. Dazu ist einerseits auf die dem Patentanspruch 1 nachgeordneten Ansprüche, andererseits auf die nachfolgende Erläuterung bevorzugter Ausführungsbeispiele der Erfindung an Hand der Zeichnung zu verweisen. In Verbindung mit der Erläuterung der bevorzugten Ausführungsbeispiele der Erfindung an Hand der Zeichung werden auch im Allgemeinen bevorzugte Ausgestaltungen und Weiterbildungen der Lehre erläutert.

### Kurzbeschreibung der Zeichnung

In der Zeichung zeigen
- Fig. 1: in einer Schnittzeichnung ein Federelement,
- Fig. 2: eine nicht erfindungsgemäße spiralförmige Armierungseinheit,
- Fig. 3: eine Schnittzeichnung des Stützelements mit nicht erfindungsgemäßer Uförmiger Armierungseinheit,
- Fig. 4: eine Schnittzeichnung des Stützelements mit einer nicht erfindungsgemäßen V-förmigen Armierungseinheit,
- Fig. 5: eine Schnittzeichnung des Stützelements mit einer S-förmigen Armierungseinheit,
- Fig. 6: eine Schnittzeichnung eines Stützelements mit einer nicht erfindungsgemäßen ringförmigen Armierungseinheit,
- Fig. 7: eine Schnittzeichnung eines Stützelements mit einer nicht erfindungsgemäßen ringförmigen Armierungseinheit, welche zwei ringförmige Elemente umfasst, und
- Fig. 8: eine Schnittzeichnung eines Stützelements mit einer Armierungseinheit, welche als Tiefziehteil ausgebildet ist.

### Ausführung der Erfindung

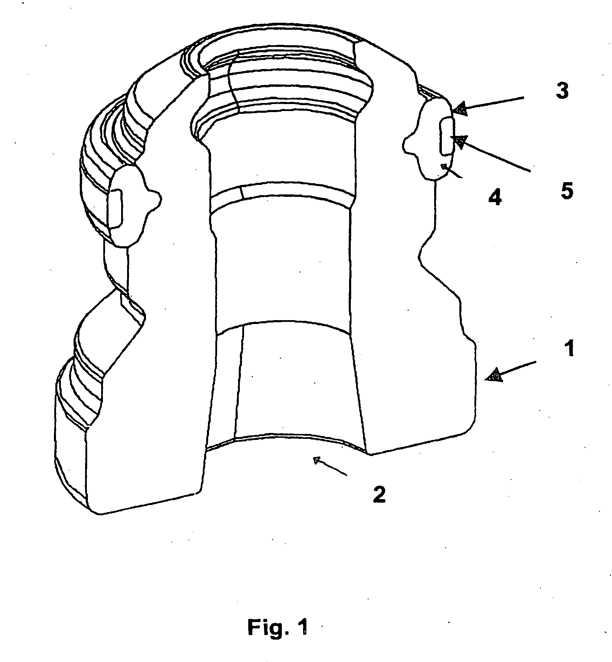

Fig. 1 zeigt ein Federelement, welches einen elastisch deformierbaren Grundkörper 1 mit einer Aufnahme 2 zur Ankopplung an ein schwingungsfähiges System umfasst. Dem Grundkörper 1 ist ein Stützelement 3 zugeordnet, welches den Grundkörper 1 zumindest teilweise stabilisiert. Das Stützelement 3 weist einen Stützkörper 4 und eine Armierungseinheit 5 auf. Der Stützkörper 4 und die Armierungseinheit 5 sind einheitlich getrennt voneinander dem Grundkörper zuordenbar.

Der Grundkörper 1 weist Ausnehmungen zur definierten Aufnahme des Stützelements 3 auf. Der Grundkörper 1 ist rotationssymmetrisch ausgebildet und weist als Aufnahme 2 einen axialen Durchgang auf. der Stützkörper 4 und die Armierungseinheit 5 sind rotationssymmetrisch ausgebildet und umgeben den Grundkörper 1 umfänglich.

Der Stützkörper 4 liegt direkt am Grundkörper 1 an und die Armierungseinheit 5 umgibt den Stützkörper 4 umfänglich.

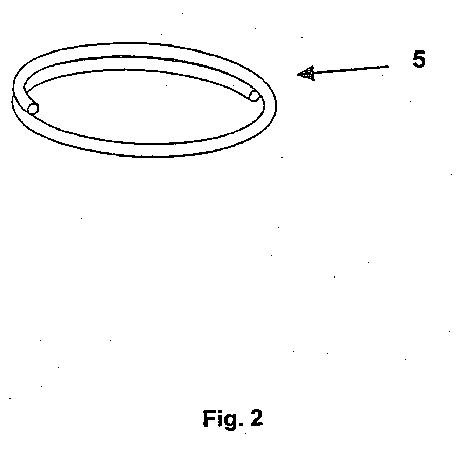

Fig. 2 zeigt eine nicht erfindungsgemäße Armierungseinheit 5, welche spiralförmig ausgebildet ist.

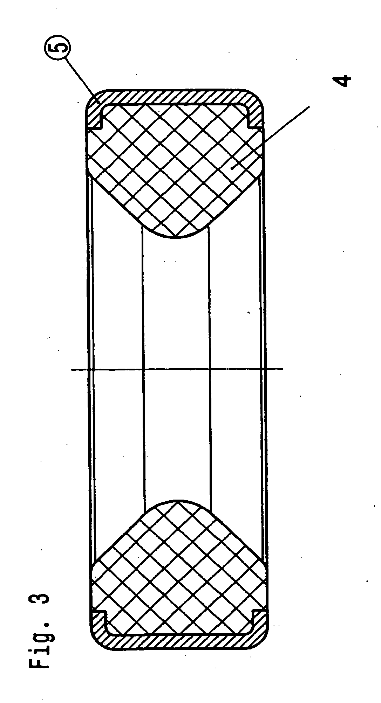

Fig. 3 zeigt eine Schnittzeichnung eines Stützelements 3, bei dem eine nicht erfindungsgemäße Armierungseinheit 5 U-förmig ausgebildet ist.

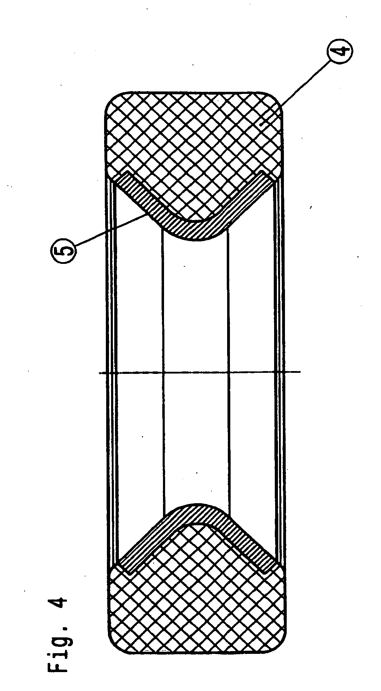

Fig. 4 zeigt ein Stützelement 3, bei dem eine nicht erfindungsgemäße Armierungseinheit 5 V-förmig ausgebildet ist und direkt am Grundkörper 1 anliegt, wobei der Stützkörper 4 die Armierungseinheit 5 umfänglich umgibt.

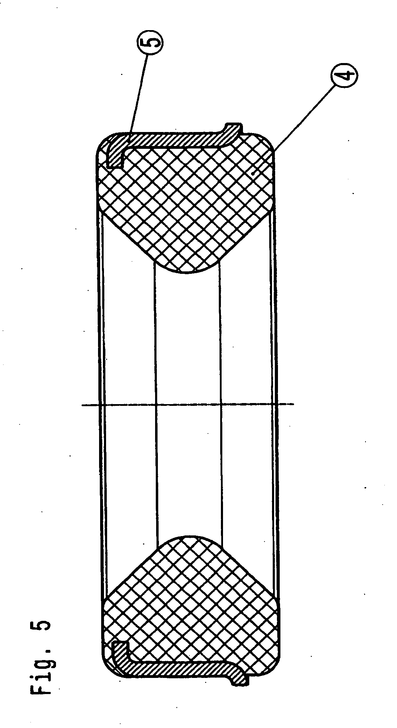

Fig. 5 zeigt ein Stützelement 3 mit einer Armierungseinheit 5, welche S-förmig als Tiefziehteil ausgebildet ist.

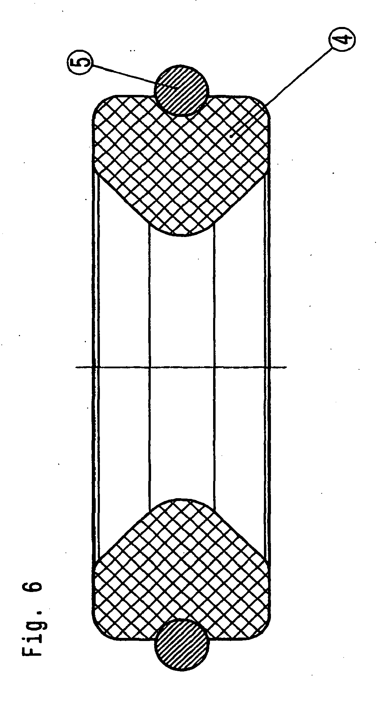

Fig. 6 zeigt ein Stützelement 3 mit einer Armierungseinheit 5, welche ringförmig ausgebildet ist. ,

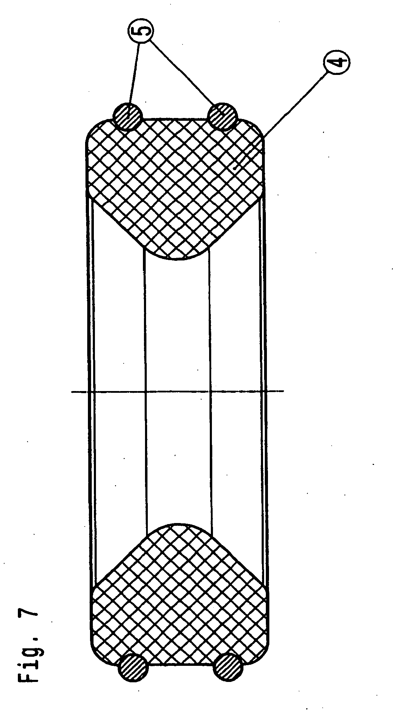

Fig. 7 zeigt ein Stützelement 3, wobei die Armierungseinheit 5 zwei ringförmige Elemente umfasst.

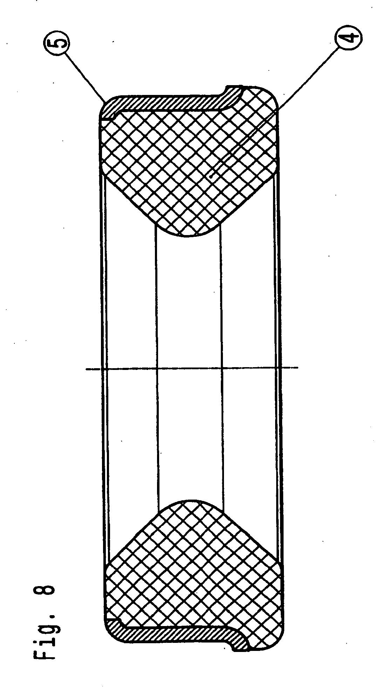

Fig. 8 zeigt ein Stützelement 3 mit einer Armierungseinheit 5, welche S-förmig als Tiefziehteil ausgebildet ist und bündig mit dem Stützkörper 4 abschließt. Die Armierungseinheit umgibt den Stützkörper teilweise so, dass sie als Kante fungiert.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervor gehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Federelement, umfassend einen elastisch deformierbaren Grundkörper (1) mit einer Aufnahme (2) zur Ankopplung an ein schwingungsfähiges System, einem dem Grundkörper (1) zugeordneten Stützelement (3), wobei das Stützelement (3) den Grundkörper (1) zumindest teilweise stabilisiert, wobei das Stützelement (3) einen Stützkörper (4) und eine Armierungseinheit (5) aufweist,wobei der Grundkörper (1) rotationssymmetrisch mit einem axialen Durchgang als Aufnahme (2) ausgebildet ist, und wobei der Stützkörper (4) und die Armierungseinheit (5) rotationssymmetrisch ausgebildet sind und den Grundkörper (1) umfänglich umgeben, **dadurch gekennzeichnet, daß** der Stützkörper (4) und die Armierungseinheit (5) dem Grundkörper (1)als separat gefertigte Einzelteile nach separater Montage zugeordnet sind, wobei die Armierungseinheit (5) ringförmig und im Querschnitt S-förmig ausgestaltet ist.

2. Federelement nach Anspruch 1, **dadurch gekennzeichnet, daß** der Stützkörper (4) direkt am Grundkörper (1) anliegt und die Armierungseinheit (5) den Stützkörper (4) umfänglich umgibt.

3. Federelement nach einem der Ansprüche 1 oder 2, **dadurch gekennzeichnet, daß** der Grundkörper (1) Ausnehmungen zur definierten Aufnahme des Stützelements (3) aufweist.

4. Federelement nach einem der Ansprüche 1 bis 3, **dadurch gekennzeichnet, daß** die Materialien, aus denen der Stützkörper (4) und die Armierungseinheit (5) gefertigt sind, biegesteifer sind, als das Material, aus dem der Grundkörper (1) gefertigt ist.

5. Federelement nach einem der Ansprüche 1 bis 4, **dadurch gekennzeichnet, daß** die Armierungseinheit (5) aus Metall gefertigt ist.

6. Federelement nach einem der Ansprüche 1 bis 5, **dadurch gekennzeichnet, daß** die Armierungseinheit (5) als Tiefziehteil gefertigt ist.

7. Federelement nach einem der Ansprüche 1 bis 6, **dadurch gekennzeichnet, daß** der Stützkörper (4) aus einem thermoplastischen Material gefertigt ist.

8. Federelement nach einem der Ansprüche 1 bis 7, **dadurch gekennzeichnet, daß** der Grundkörper (1) aus Gummi gefertigt ist.

## Claims

1. Spring element, comprising an elastically deformable basic body (1), having a receptacle (2) for coupling to a vibratory system, and a supporting element (3) assigned to the basic body (1), wherein the supporting element (3) at least partly stabilizes the basic body (1), wherein the supporting element (3) has a supporting body (4) and a reinforcing unit (5), wherein the basic body (1) is of rotationally symmetrical design with an axial passage as receptacle (2), and wherein the supporting body (4) and the reinforcing unit (5) are of rotationally symmetrical design and surround the basic body (1) circumferentially, **characterized in that** the supporting body (4) and the reinforcing unit (5) are assigned to the basic body (1) as separately produced individual parts after separate fitting, wherein the reinforcing unit (5) is designed to be annular and so as to be S-shaped in cross section.

2. Spring element according to Claim 1, **characterized in that** the supporting body (4) bears directly against the basic body (1) and the reinforcing unit (5) surrounds the supporting body (4) circumferentially.

3. Spring element according to Claim 1 or 2, **characterized in that** the basic body (1) has recesses for accommodating the supporting element (3) in a defined manner.

4. Spring element according to one of Claims 1 to 3,
**characterized in that** the materials from which the supporting body (4) and the reinforcing unit (5) are produced are more resistant to bending than the material from which the basic body (1) is produced.

5. Spring element according to one of Claims 1 to 4, **characterized in that** the reinforcing unit (5) is produced from metal.

6. Spring element according to one of Claims 1 to 5, **characterized in that** the reinforcing unit (5) is produced as a deep-drawn part.

7. Spring element according to one of Claims 1 to 6, **characterized in that** the supporting body (4) is produced from a thermoplastic material.

8. Spring element according to one of Claims 1 to 7, **characterized in that** the basic body (1) is produced from rubber.

## Revendications

1. Elément élastique comprenant un corps de base (1) élastiquement déformable et doté d'un logement (2) qui permet de l'accoupler à un système oscillant, un élément de soutien (3) associé au corps de base (1), l'élément de soutien (3) stabilisant au moins partiellement le corps de base (1), l'élément de soutien (3) présentant un corps de soutien (4) et une unité d'armature (5), le corps de base (1) étant symétrique en rotation et présentant comme logement (2) un passage axial et le corps de soutien (4) et l'unité d'armature (5) en rotation entourant la périphérie du corps de base (1),
**caractérisé en ce que**
le corps de soutien (4) et l'unité d'armature (5) sont associés au corps de base (1) sous la forme de composants différents fabriqués séparément et montés séparément, l'unité d'armature (5) ayant une forme annulaire et présentant la forme d'un S en coupe transversale.

2. Elément élastique selon la revendication 1, **caractérisé en ce que** le corps de soutien (4) repose directement sur le corps de base (1) et **en ce que** l'unité d'armature (5) entoure la périphérie du corps de soutien (4).

3. Elément élastique selon les revendications 1 ou 2,
**caractérisé en ce que** le corps de base (1) présente des logements qui permettent de loger l'élément de soutien (3) de manière définie.

4. Elément élastique selon l'une des revendications 1 à 3, **caractérisé en ce que** les matériaux en lesquels le corps de soutien (4) et l'unité d'armature (5) sont réalisés sont plus rigides en flexion que le matériau en lequel le corps de base (1) est fabriqué.

5. Elément élastique selon l'une des revendications 1 à 4, **caractérisé en ce que** l'unité d'armature (5) est réalisée en métal.

6. Elément élastique selon l'une des revendications 1 à 5, **caractérisé en ce que** l'unité d'armature (5) est fabriquée sous la forme d'une pièce emboutie.

7. Elément élastique selon l'une des revendications 1 à 6, **caractérisé en ce que** le corps de soutien (4) est réalisé en un matériau thermoplastique.

8. Elément élastique selon l'une des revendications 1 à 7, **caractérisé en ce que** le corps de base (1) est réalisé en caoutchouc.
